# EUROPEAN PATENT SPECIFICATION

(11) **EP 3 277 549 B1**
(45) Date of publication and mention of the grant of the patent: **11.09.2024**
(21) Application number: 16715630.6
(22) Date of filing: 04.04.2016
(51) Int. Cl.: B60T 8/17, B60T 8/1755

(54) **TRAILER BRAKE SYSTEM**
ANHÄNGERBREMSSYSTEM
SYSTÈME DE FREIN DE REMORQUE

(30) Priority: 02.04.2015 GB 201505709
(43) Date of publication of application: 07.02.2018
(73) Proprietor: KNORR-BREMSE Systeme für Nutzfahrzeuge GmbH, 80809 München (DE)
(72) Inventor: FRY, Matthew, Bristol BS16 7FE (GB); MEDERER, Martin, 80809 Munich (DE)
(74) Representative: Moore, David Simon
(86) International application number: PCT/IB2016/051910
(87) International publication number: WO 2016/157162

(56) References cited:
- US-A1- 2005 137 767
- US-A1- 2006 152 075
- US-A1- 2008 288 148

## Description

The present invention relates to a brake control system in particular, but not exclusively, for a trailer vehicle or agricultural vehicle.

Existing trailer brake system valve arrangements are known from, for example, WO03011664 which discloses brakes of the front axle of the trailer of a utility vehicle are impinged upon with a brake pressure by way of a single, common ABS valve. Said ABS valve is electrically actuated by an EBS module associated with the rear wheel brakes depending on a differential slip between the front axle and the rear axle.

GB2499459 discloses a further brake system comprises a braking device capable of generating a braking force on a wheel on the trailer, a brake force into the brake cylinders being controllable by a braking ECU. The braking ECU is connected to a standards compliant communication bus on said trailer and is adapted to receive data inputs from sensors on the trailer. An interface to trailer electronics and a communications interface are also provided. The brake system is further adapted to transmit a trailer identifier such as an SSID, such that the trailer identifier can be paired with a further device, such as a mobile telephone associated with a tractor driver, the further device having previously been provided with the trailer identifier.

As braking systems become more sophisticated and have additional functionality such as that described in GB2499459 or levelling control, the cost of the brake system tends to increase. An additional problem is that there is increasing pressure on space on trailers due to this functionality as the additional functionality requires additional electrical and pneumatic connections for which there is little space. Trailer builders in addition do not wish to redesign the trailer if this is avoidable and so the compromises in the known systems have been perceived to have a lower reliability due to the additional external connections. EP2121359 describes a valve adapted to provide additional raise/lower functionality to a known braking system. Although the valve disclosed in this patent provides the required raise lower functionality, its inclusion with known brake systems results in additional cost and space requirements on the trailer.

US2005/0137767 discloses a roll stability system using ABS hardware. The solution proposed suffers from the problem that it uses a lot of air, which is disadvantageous with roll stability as these events are quite common. The solution proposed in this document also cannot control the brake pressure when then roll stability is active so a further braking intervention is not possible when the roll stability is active.

US2008288148 relates to a solution for a single channel ABS system and teaches that it is advantageous to use the single channel system in contrast to the two channel systems in the prior art. This solution whilst low cost as it uses a single brake modulator is inherently unable to provide the accuracy of the two channel systems.

These known solutions, which are developed for the US and European markets, comprise highly integrated mechatronic modules which lower the component count of the brake control for the vehicle to two or three parts. Such a high level of integration provides a clear advantage in terms of size, weight and installation simplicity to the original equipment manufacturer because lower cycle times directly result in lower production costs.

In both the US and European markets, both tractor and the trailer have the same high levels on integration, as such the service networks for vehicles are highly trained and skilled and capable of dealing with complex systems. Furthermore, vehicle operators are aware of the need to regularly maintain and service equipment to prevent premature failures.

However, in emerging markets such as Brazil and China although these service networks exist but they do not have the knowledge and training for dealing with highly complex systems. Also vehicle operators may not be as diligent about regular maintenance leading to situations where the air supply to the trailer is contaminated with water, oil and dirt particles. In such conditions highly integrated mechatronic solutions may suffer from premature failure. As the service networks are not trained in such complex systems, when faced with a such a component, given the high replacement cost, may attempt a repair of the module themselves. This in turn may lead to safety related defects being introduced due to the repair which is clearly not desirable.

The present invention therefore seeks to provide a trailer electronic brake system capable of providing more advanced functionality such as roll stability that requires less training to maintain safely.

According to the invention there is provided a brake control system for a trailer in accordance with the features of Claim 1.

The trailer is provided with at least two wheel speed sensors adapted to provide an indication of wheel speed on respective sides of the trailer and a lateral acceleration sensor so that the brake control unit can determine whether a roll stability event is about to occur, for example due to the differential wheel speeds.

According to the invention the brake control unit comprises load valve, exhaust valve and a relay valve. The invention provides a simple single channel RSP system to pilot the ABS relay valves - as there are two ABS valves, the RSP system can direct the pressure to the left or right side of the vehicle depending on the dynamic situation of the trailer - thereby providing a true multichannel RSP system. The solution of the invention provides a more accurate control of the brake pressure than in the prior art solutions, in particular it is possible to accurately brake during an RSP intervention which the known prior art solutions cannot perform. Advantageously, the RSP module relay valve piston may be reduced in size as it is only a pilot for the main ABS modulators. However, it may also be increased in size to reduce the hysteresis / crack pressure.

For emerging markets, such a separation of the RSP system from the ABS valves provides an additional safety benefit. It is known that in the case of contamination on a mechatronic module such as used in Europe, the module will detect an error and shut down, thus resulting in no ABS, load sensing or RSP, but such occurrences are extremely rare due to good maintenance regimes. In the case of the distributed system, the Single channel RSP module may become contaminated and shut down, however, ABS would still be fully functional via the external ABS relay valves.

An exemplary embodiment of the invention will now be described in greater detail in which:
Fig.1 shows a schematic of a brake system
Fig. 2 shows schematically a brake control unit
Fig. 3 shows schematically a relay valve

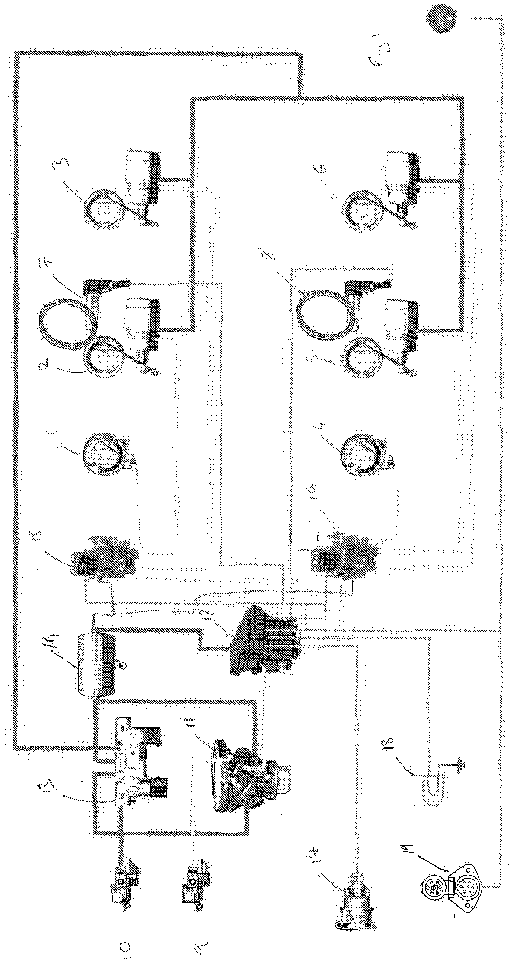

Figure 1 shows a schematic of a brake system for a trailer having three axles, each wheel end 1-6 of which being provided with a braking device capable of exerting a brake force. The wheel-ends 2 and 5 are provided with a speed sensor 7,8. The trailer electronic braking system is provided with pneumatic connection to the service brake line or yellow line 9 and the emergency or red line 10 from the prime mover or truck (not shown). The yellow line 9 is connected to a trailer brake valve 11, which provides an emergency brake function acting on the service brake line. The trailer brake valve 11 is connected to the trailer RSP module 12. The redline 10 is connected to an optional park and shunt valve 13, which is in fluid connection with the rear wheel ends 2,3,5 and 6 to provide manoeuvrability when the trailer is parked. Both the trailer brake valve 11 and the park and shunt valve 13 are connected to the trailer reservoir 14, which in turn is in fluid communication with the trailer RSP module 12. The reservoir 14 is also connected to each of the relay valves 15, 16.

The RSP module 12 is connected to first and second single channel ABS valves 15 and 16, each of which valves is adapted to supply service braking pressure to the braking devices on the wheel ends 1-6. The RSP module 12 is provided with an electrical connection to the prime mover/truck via an ISO7638 connector 17 as well as a separate supply via the ISO1185 stop light connector 19. A trailer mounted warning lamp 18 is controlled via the RSP module 12. Further electrical connections are shown to control each of the ABS valves 15, 16 as well as electrical inputs from the wheel speed sensors 7,8.

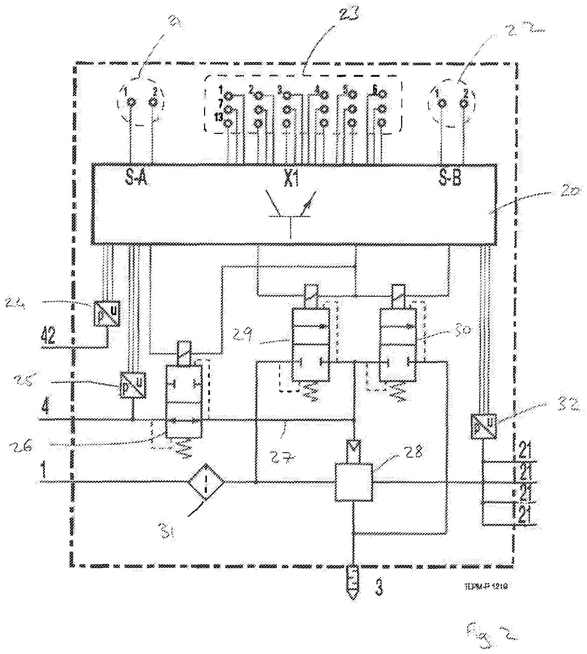

Figure 2 shows schematically a pneumatic arrangement for the RSP module 12. The module 12 comprises an ECU 20 adapted to receive the inputs from the wheel speed sensors 7,8 at inputs 21, 22 as well as the connections from the ISO7638 connector 23. The module is shown with three pneumatic inputs, namely from the reservoir via port 1, from the service brake line via port 4 and from the air suspension via port 42. The air suspension port 42 is provided with a pressure transducer 24, which is controllable by the ECU 20. A further pressure transducer 25 is provided to measure the pressure in the service brake line.

The service brake line connects to a back up solenoid valve 26, the output of which is connected to a conduit 27, which supplies the pressure to the pilot of relay valve 28. The conduit 27 is also connected to the outlet of the load valve 29 and inlet of the exhaust valve 30. The load valve and exhaust valve are 2/2 solenoid valves.

The air supply through port 1 passes through a filter 31 to the inlet of the relay valve 28, which is provided with two outlets. The first outlet supplies the brake pressure to the ABS valves via ports 21 and the second outlet is connected to the common exhaust port 3, to which the outlet of the exhaust valve 30 is also connected. A further pressure transducer 32 is provided in the conduit to the ports 21, the electrical outlet of which is controllable by the ECU 20. The solenoid valves 26, 29, 30 are also electrically controlled by the ECU 20.

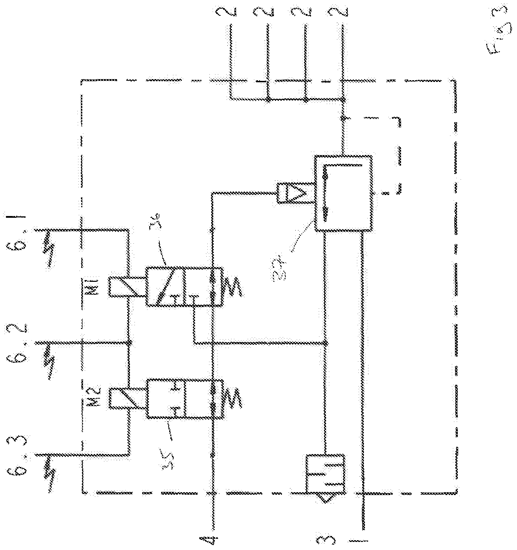

Figure 3 shows the pneumatic arrangement of the relay valves 15, 16. The relay valve is provided with two pneumatic inputs, namely from the reservoir via port 1, from the service brake line via port 4.

The pneumatic pressure from the port 4 is supplied to a load valve 35, shown here as a 2/2 solenoid valve and an exhaust valve 36, shown here as a 3/2 solenoid valve. The first outlet of the exhaust valve 36 pilots the relay valve 37, which receives a supply pressure from port 1. The second outlet of the exhaust valve 36 connects to the exhaust conduit along with the exhaust from the relay valve 37. The other outlet of the relay valve is connected to the brake pressure supply ports 2. The electrical control of the solenoid valves is provided via three electrical connection to the ECU 20. It would also be possible to operate the relay valve 37 solely with the exhaust valve and to dispense with the load valve.

The provision of two single channel brake and relay valves, which are controllable via a braking ECU 20 enables the provision of roll stability (RSP) on a trailer in such a manner that it can be easily repaired in areas without service networks as the pneumatic and electrical connections are very simple.

## Claims

1. A brake control system for a trailer which brake control system is adapted to provide roll stability control (RSP), the brake control system comprising a brake control unit, which comprises a load (29), exhaust (30) and backup valve (26) and which control unit is adapted to control pneumatically and electrically first and second ABS relay valves (15,16), each of the ABS relay valves being assigned to a single brake channel adapted to control the braking pressure on the trailer wherein the trailer is provided with at least two wheel speed sensors (7,8) adapted to provide an indication of wheel speed on respective sides of the trailer and a lateral acceleration sensor so that the brake control unit can determine whether a roll stability event is about to occur, wherein each channel acts on one side of the trailer, and wherein the brake control unit determines whether there is a loss of stability based at least in part on the wheel speed sensor signals and a signal from the lateral acceleration sensor and in the event that the brake control unit determines that there is a loss of stability controls the brake pressure in one channel to provide stability control,
**characterised in that** the brake control system comprises a further relay valve (28), an outlet of which relay valve (28) supplies a pilot pressure to each of the ABS relay valves (15,16), each of which ABS relay valves is controllable by a respective further solenoid, which further solenoid is independently actuatable by the brake control unit to provide control of the braking pressure.

2. A brake control system according to Claim 1, wherein the brake control unit controls the further solenoid to provide brake control during an RSP intervention.

3. A brake control system according to any one of Claim 1 or Claim 2,. wherein the control unit controls the braking pressure in each channel independently of the brake pressure in the other channel.

4. A brake control system according to any one of Claims 1 to 3, wherein the brake pressure is controlled in both channels.

## Patentansprüche

1. Bremssteuersystem für einen Anhänger, wobei das Bremssteuersystem dazu geeignet ist, eine Überrollstabilitätskontrolle (RSP) bereitzustellen, wobei das Bremssteuersystem eine Bremssteuereinheit umfasst, die ein Last- (29), ein Auslass- (30) und ein Backup-Ventil (26) umfasst, und wobei die Steuereinheit dazu geeignet ist, ein erstes und ein zweites ABS-Relaisventil (15, 16) pneumatisch und elektrisch zu steuern, wobei jedes der ABS-Relaisventile einem einzelnen Bremskanal zugewiesen ist, der dazu geeignet ist, den Bremsdruck auf dem Anhänger zu steuern, wobei der Anhänger mit mindestens zwei Raddrehzahlsensoren (7, 8) bereitgestellt ist, die dazu geeignet sind, eine Anzeige der Raddrehzahl auf jeweiligen Seiten des Anhängers bereitzustellen, und einem Querbeschleunigungssensor, so dass die Bremssteuereinheit bestimmen kann, ob ein Überrollstabilitätsereignis bevorsteht, wobei jeder Kanal auf eine Seite des Anhängers wirkt, und wobei die Bremssteuereinheit zumindest teilweise auf der Grundlage der Signale der Raddrehzahlsensoren und eines Signals vom Querbeschleunigungssensor bestimmt, ob ein Stabilitätsverlust vorliegt, und für den Fall, dass die Bremssteuereinheit feststellt, dass ein Stabilitätsverlust vorliegt, den Bremsdruck in einem Kanal steuert, um eine Stabilitätskontrolle bereitzustellen,
**dadurch gekennzeichnet, dass** das Bremssteuersystem ein weiteres Relaisventil (28) umfasst, ein Auslass des Relaisventils (28) einen Steuerdruck an jedes der ABS-Relaisventile (15, 16) liefert, wobei jedes der ABS-Relaisventile durch einen jeweiligen weiteren Magneten steuerbar ist, wobei der weitere Magnet von der Bremssteuereinheit unabhängig betätigt werden kann, um eine Steuerung des Bremsdrucks bereitzustellen.

2. Bremssteuersystem nach Anspruch 1, wobei die Bremssteuereinheit den weiteren Magneten steuert, um während eines RSP-Eingriffs eine Bremssteuerung bereitzustellen.

3. Bremssteuersystem nach einem der Ansprüche 1 oder 2, wobei die Steuereinheit den Bremsdruck in jedem Kanal unabhängig vom Bremsdruck im anderen Kanal steuert.

4. Bremssteuersystem nach einem der Ansprüche 1 bis 3, wobei der Bremsdruck in beiden Kanälen gesteuert wird.

## Revendications

1. Système de commande de frein pour une remorque, lequel système de commande de frein est adapté pour assurer un contrôle de stabilité de roulis (RSP), le système de commande de frein comprenant une unité de commande de frein, qui comprend une charge (29), un échappement (30) et une valve de secours (26) et laquelle unité de commande est adaptée pour commander pneumatiquement et électriquement des première et seconde valves-relais ABS (15, 16), chacune des valves-relais ABS étant affectée à un canal de freinage unique adapté pour réguler la pression de freinage sur la remorque, dans lequel la remorque est pourvue d'au moins deux capteurs de vitesse de roue (7, 8) adaptés pour fournir une indication de la vitesse des roues sur les côtés respectifs de la remorque et d'un capteur d'accélération latérale de telle sorte que l'unité de commande de frein puisse déterminer si un événement de stabilité de roulis est sur le point de se produire, dans lequel chaque canal agit sur un côté de la remorque et dans lequel l'unité de commande de frein détermine s'il y a une perte de stabilité sur la base, au moins en partie, des signaux de capteur de vitesse de roue et d'un signal provenant du capteur d'accélération latérale et, dans le cas où l'unité de commande de frein détermine qu'il y a une perte de stabilité, régule la pression de freinage dans un canal pour assurer le contrôle de la stabilité,
**caractérisé en ce que** le système de commande de frein comprend une valve-relais supplémentaire (28), une valve-relais (28), dont une sortie de la valve-relais (28) fournit une pression pilote à chacune des valves-relais ABS (15, 16), chacune des valves-relais ABS peut être commandée par un solénoïde supplémentaire respectif, lequel solénoïde supplémentaire peut être actionné indépendamment par l'unité de commande de frein pour assurer une régulation de la pression de freinage.

2. Système de commande de frein selon la revendication 1, dans lequel l'unité de commande de frein commande le solénoïde supplémentaire pour fournir une commande de frein pendant une intervention RSP.

3. Système de commande de frein selon l'une quelconque de la revendication 1 ou de la revendication 2, dans lequel l'unité de commande régule la pression de freinage dans chaque canal indépendamment de la pression de freinage dans l'autre canal.

4. Système de commande de frein selon l'une quelconque des revendications 1 à 3, dans lequel la pression de freinage est régulée dans les deux canaux.
